# EUROPEAN PATENT APPLICATION

(11) **EP 4 509 320 A1**
(43) Date of publication of application: **19.02.2025**
(21) Application number: 24185886.9
(22) Date of filing: 02.07.2024
(51) Int. Cl.: B41J 2/205, B41J 2/21, B41J 29/377

(54) **LIQUID DISCHARGE APPARATUS**

(30) Priority: 17.08.2023 JP 2023132990
(71) Applicant: Ricoh Company, Ltd., Tokyo 143-8555 (JP)
(72) Inventor: MARUMO, Daiki, Tokyo, 143-8555 (JP)
(74) Representative: J A Kemp LLP

(57) **Abstract**

A liquid discharge apparatus (1) includes a first discharge unit (23a) to discharge ink onto a base material, a second discharge unit (23c) to discharge a liquid binder onto the base material, and circuitry (100). The circuitry (100) causes the first discharge unit (23a) to discharge the ink onto a first region in the base material for a first amount per unit area, causes the first discharge unit (23a) to discharge the ink onto a second region in the base material for a second amount smaller than the first amount, causes the second discharge unit (23c) to discharge the liquid binder onto the first region for a third amount corresponding to the first amount, and causes the second discharge unit (23c) to discharge the liquid binder onto the second region for a fourth amount corresponding to the second amount. The fourth amount is larger than the third amount.

## Description

### BACKGROUND

### Technical Field

Embodiments of the present disclosure relate to a liquid discharge apparatus.

### Related Art

As an image forming apparatus, a digital to film or a direct to film (DTF) printer is known in the art. The DTF printer applies color ink to a base material such as a film, and further applies hot-melt adhesive powder onto the print side of the base material. The applied color ink on the film is transferred to a recording medium such as a garment.

In the related art, the DTF printer may generate unevenness of the adhesive powder applied on the base material. When the adhesive powder is used, since the adhesive powder does not adhere to a region of the base material where the amount of ink is small, for example, a large amount of clear ink is applied to the base material to adhere the adhesive powder to the base material. A large amount of clear ink may cause color boundary bleeding or beading, and may also cause an increase in cost.

Japanese Unexamined Patent Application Publication No. 2021-183418 discloses that a colored layer and an adhesive layer are formed on a base material. According to Japanese Unexamined Patent Application Publication No. 2021-183418, an image can be reliably formed with increased visibility. However, in Japanese Unexamined Patent Application Publication No. 2021-183418, the fastness of the image is not sufficient. Both sufficient fastness and cost reduction are preferably achieved. The color boundary bleeding and beading are preferably prevented to increase image quality.

### SUMMARY

The present disclosure has an object to provide a liquid discharge apparatus that can increase image quality with sufficient fastness of an image and reduce the cost for image formation in the DTF printing.

Embodiments of the present disclosure describe an improved liquid discharge apparatus that includes a first discharge unit to discharge ink onto a base material to form an image on the base material, a second discharge unit to discharge a liquid binder onto the base material onto which the ink has been discharged to form a binder on the base material, and circuitry. The circuitry causes the first discharge unit to discharge the ink onto a first region in the base material for a first amount per unit area based on an image data to form a first image on the base material, causes the first discharge unit to discharge the ink onto a second region in the base material for a second amount per unit area smaller than the first amount per unit area based on the image data to form a second image on the base material, causes the second discharge unit to discharge the liquid binder onto the first region for a third amount per unit area corresponding to the first amount per unit area of the ink, and causes the second discharge unit to discharge the liquid binder onto the second region for a fourth amount per unit area corresponding to the second amount per unit area of the ink. The fourth amount per unit aera is larger than the third amount per unit area.

As a result, according to one aspect of the present disclosure, a liquid discharge apparatus can be provided that increases image quality with the sufficient fastness of an image and reduces the cost for image formation in the DTF printing.

### BRIEF DESCRIPTION OF THE SEVERAL VIEWS OF THE DRAWINGS

A more complete appreciation of the disclosure and many of the attendant advantages and features thereof can be readily obtained and understood from the following detailed description with reference to the accompanying drawings, wherein:
FIG. 1 is a perspective view of a liquid discharge apparatus according to an embodiment of the present disclosure;
FIG. 2 is a diagram illustrating a configuration of the liquid discharge apparatus of FIG. 1, according to the present embodiment;
FIG. 3 is a block diagram illustrating a hardware configuration of the liquid discharge apparatus of FIG. 1, according to the present embodiment;
FIG. 4 is a diagram illustrating a configuration of a heater of the liquid discharge apparatus of FIG. 1, according to the present embodiment;
FIGS. 5A and 5B are schematic plan views of discharge units of the liquid discharge apparatus of FIG. 1, according to the present embodiment;
FIG. 6A is a diagram illustrating of a dot pattern of a binder having a random pattern according to a first example;
FIG. 6B is a diagram illustrating a dot pattern of the binder having a honeycomb structure according to a second example;
FIGS. 7A and 7B are graphs illustrating the relationship between an adhesion amount of color ink, an application amount of powder, and an adhesion amount of spot color ink according to a comparative example; and
FIG. 7C is a graph illustrating the relationship between an adhesion amount of color ink, an application amount of liquid glue, and an adhesion amount of spot color ink according to a third example.

The accompanying drawings are intended to depict embodiments of the present invention and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

A liquid discharge apparatus according to embodiments of the present disclosure is described below with reference to the drawings. Embodiments of the present disclosure are not limited to the embodiments described below and may be other embodiments than the embodiments described below. The following embodiments may be modified by, for example, addition, modification, or omission within the scope that would be obvious to one skilled in the art. Any aspects having advantages as described for the following embodiments according to the present disclosure are included within the scope of the present disclosure.

A liquid discharge apparatus according to an embodiment of the present disclosure includes a first discharge unit, a second discharge unit, and a controller. The first discharge unit discharges ink onto a base material. The second discharge unit discharges a liquid binder for thermal transfer onto the base material onto which the ink has been discharged. The controller determines an ink usage per unit area based on image data and controls the second discharge unit so that a discharge amount of the binder per unit area when the determined ink usage is lower than a predetermined reference value is larger than a discharge amount of the binder per unit area when the determined ink usage is equal to or higher than the predetermined reference value.

According to one aspect of the present disclosure, in the DTF printing, image quality can be increased with the sufficient fastness of an image, and the cost for image formation can be reduced.

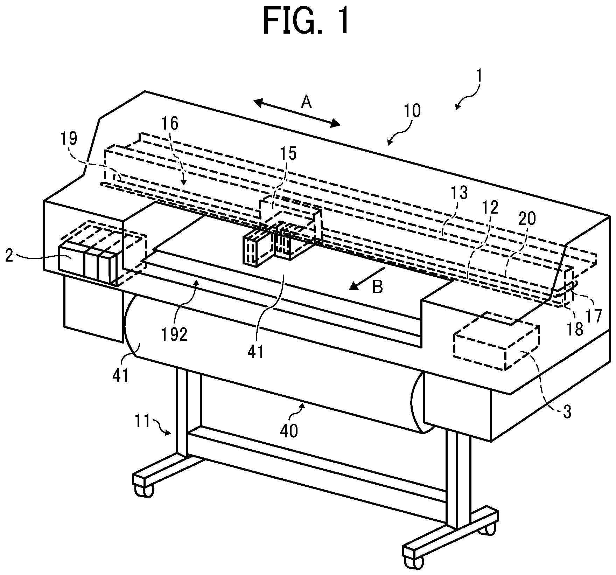

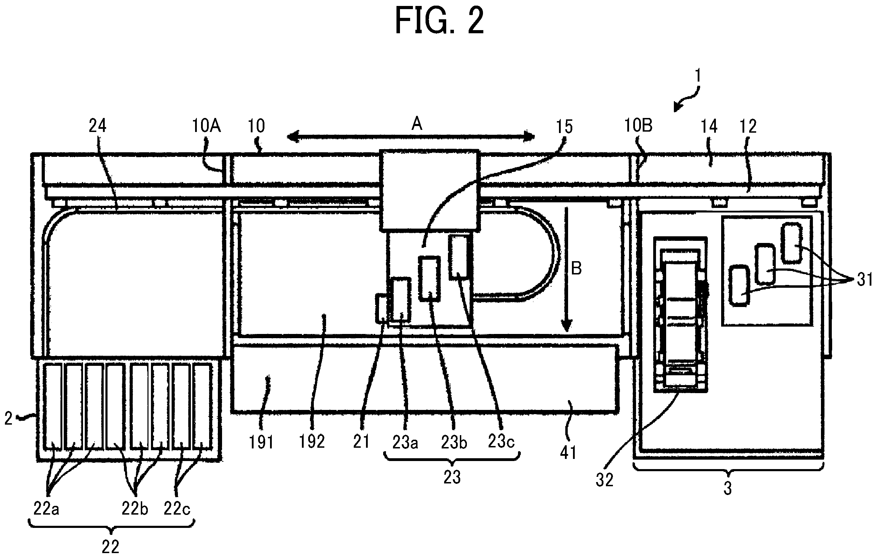

FIG. 1 is a perspective view of a liquid discharge apparatus 1 according to an embodiment of the present disclosure. FIG. 2 is a diagram illustrating a configuration of the liquid discharge apparatus 1 according to the present embodiment. As illustrated in FIGS. 1 and 2, the liquid discharge apparatus 1 according to the present embodiment includes an apparatus body 10 and a support base 11 that supports the apparatus body 10.

Side plates 10A and 10B are disposed on the left and right of the apparatus body 10. A guide rod 12 and a guide stay 13 as guides are stretched between the side plates 10A and 10B. The liquid discharge apparatus 1 includes a sub sheet metal guide 14. The guide rod 12 and the guide stay 13 slidably hold a carriage 15.

A main scanning mechanism 16 moves the carriage 15 in a main scanning direction indicated by arrow A in FIG. 1. The main scanning mechanism 16 includes a main scanning motor 17, a drive pulley 18, a driven pulley 19, and a timing belt 20. The main scanning motor 17 is arranged on one side (right side in FIG. 1) of the apparatus body 10 in the main scanning direction. The drive pulley 18 is rotatably driven by the main scanning motor 17. The driven pulley 19 is arranged on the other side (left side in FIG. 1) of the apparatus body 10 in the main scanning direction. The timing belt 20 is a traction member looped around the drive pulley 18 and the driven pulley 19. The driven pulley 19 is pressed outward (in a direction away from the drive pulley 18) by a tension spring to apply tension to the timing belt 20.

The carriage 15 moves in the main scanning direction indicated by arrow A in FIGS. 1 and 2 via the timing belt 20 rotated by the main scanning motor 17. The carriage 15 is provided with an optical sensor 21 that detects an end of a medium (end of a sheet). The carriage 15 includes a liquid discharge head 23 that discharges ink droplets of colors, such as black (K), yellow (Y), magenta (M), and cyan (C), and a binder in accordance with an ink cartridge 22 mounted.

The liquid discharge head 23 is an example of a liquid discharge unit and includes discharge units 23a, 23b, and 23c. Each of the discharge units 23a, 23b, and 23c has a nozzle row in which multiple nozzles are arranged in a sub-scanning direction indicated by arrow B in FIGS. 1 and 2. The sub-scanning direction is orthogonal to the main scanning direction. The liquid discharge head 23 is mounted so as to discharge liquid droplets downward from the discharge units 23a, 23b, and 23c.

The discharge units 23a, 23b, and 23c of the liquid discharge head 23 are shifted from each other in the sub-scanning direction, for example. The carriage 15 is provided with a sub-tank for supplying ink of each color and the binder to the liquid discharge head 23. In addition, for example, white ink and clear ink may be supplied.

The liquid discharge apparatus 1 includes a cartridge mount 2 on which ink cartridges 22a, 22b, and 22c of the respective colors are removably mounted. The ink in the ink cartridge 22 is supplied to the sub tank of the carriage 15 through a supply tube 24 of each color by a supply pump unit. The ink cartridge 22 includes a binder ink cartridge, and may include, for example, a white ink cartridge.

The liquid discharge apparatus 1 includes a maintenance mechanism 3 in a non-printing region on one end of the range of movement of the carriage 15 in the main scanning direction. The maintenance mechanism 3 maintains or recovers the state of the discharge units 23a, 23b, and 23c of the liquid discharge head 23. The maintenance unit 3 includes caps 31 to cover nozzle faces of the liquid discharge head 23 and a wiper unit 32 to wipe the nozzle faces. A replaceable waste liquid tank that stores waste liquid caused by the maintenance and recovery operation is disposed below the maintenance mechanism 3.

A sheet 41 is set in a sheet feeding unit 40. A sheet 41 having a different size in the width direction can also be set in the sheet feeding unit 40.

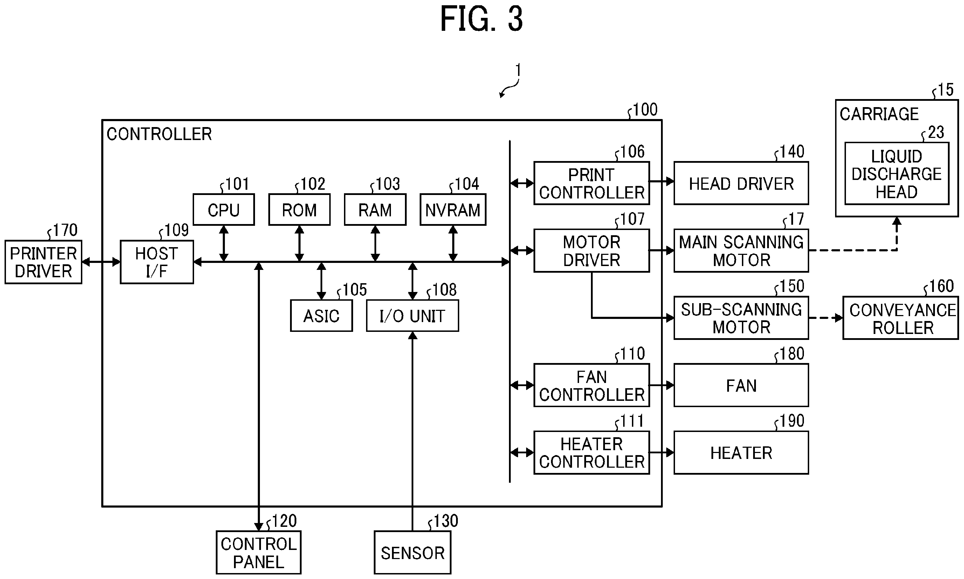

FIG. 3 is a block diagram illustrating a hardware configuration of the liquid discharge apparatus 1 according to the present embodiment. As illustrated in FIG. 3, the liquid discharge apparatus 1 includes a controller 100, a control panel 120, a sensor 130, a head driver 140, the main scanning motor 17, a sub-scanning motor 150, the carriage 15, a conveyance roller pair 160, a printer driver 170, a fan 180, and a heater 190.

The controller 100 includes a central processing unit (CPU) 101, a read-only memory (ROM) 102, and a random-access memory (RAM) 103. The CPU 101 controls the entire of the liquid discharge apparatus 1. The ROM 102 stores fixed data such as a program to be executed by the CPU 101. The RAM 103 temporarily stores, for example, image data.

The controller 100 includes a non-volatile RAM (NVRAM) 104 and an application-specific integrated circuit (ASIC) 105. The NVRAM 104 is a non-volatile memory that can retain data even while a power supply of the liquid discharge apparatus 1 is shut off. The ASIC 105 performs image processing, such as various signal processing and sorting on image data, and processing of input and output signals for controlling the entire liquid discharge apparatus 1.

The controller 100 includes a print controller 106. The carriage 15 transfers data for driving the liquid discharge head 23 to the head driver 140. The head driver 140 drives the liquid discharge head 23 mounted on the carriage 15 to cause the liquid discharge head 23 to discharge ink.

The controller 100 includes a motor driver 107. The motor driver 107 drives the main scanning motor 17 and the sub-scanning motor 150. The main scanning motor 17 is driven to move the carriage 15 in the main scanning direction. The sub-scanning motor 150 is driven to rotate the conveyance roller pair 160 in the sub-scanning direction.

The controller 100 includes an input/output (I/O) unit 108. The I/O unit 108 acquires data from the sensor 130 and extracts data used for controlling each unit of the liquid discharge apparatus 1. For example, the sensor 130 corresponds to a sensor group including a photo sensor, a temperature sensor, and an encoder sensor. The control panel 120 inputs and outputs various data.

The controller 100 includes a host interface (I/F) 109. The host I/F 109 transmits and receives data and signals to and from a host. Specifically, the host I/F 109 transmits and receives data and signals to and from the printer driver 170 of the host of, for example, a data processor (e.g., a client computer), an image reading device, or an imaging device, via a cable or a network. The CPU 101 reads and analyzes print data in a reception buffer included in the host I/F 109. The ASIC 105 performs the image processing and the sorting on image data, and the image data is transferred from the print controller 106 to the head driver 140.

The print controller 106 transfers the image data as serial data, and outputs, for example, a transfer clock, a latch signal, and a control signal, which are used to transfer the image data, to the head driver 140. The head driver 140 selectively applies drive pulses forming a drive waveform given from the print controller 106 to a pressure generator of the liquid discharge head 23 based on the image data that is serially input and corresponds to one line to be formed by the liquid discharge head 23. Thus, the liquid discharge head 23 is driven to discharge liquid.

At this time, the head driver 140 selects a part or all of the drive pulses forming the drive waveform or a part or all of waveform elements forming the drive pulses. Thus, the liquid discharge head 23 can selectively discharge, for example, large droplets, medium droplets, and small droplets to form dots of different sizes.

The controller 100 includes a fan controller 110 and a heater controller 111. The fan controller 110 controls the output of the fan 180 to blow air at a predetermined temperature and air volume. The heater controller 111 controls the heater 190 to a set temperature.

The fan 180 is driven to accelerate the convection of air inside the liquid discharge apparatus 1 so as to prevent the temperature from increasing excessively due to the accumulation of warmed air in an upper portion of the liquid discharge apparatus 1. The fan 180 is connected to the fan controller 110 of the controller 100.

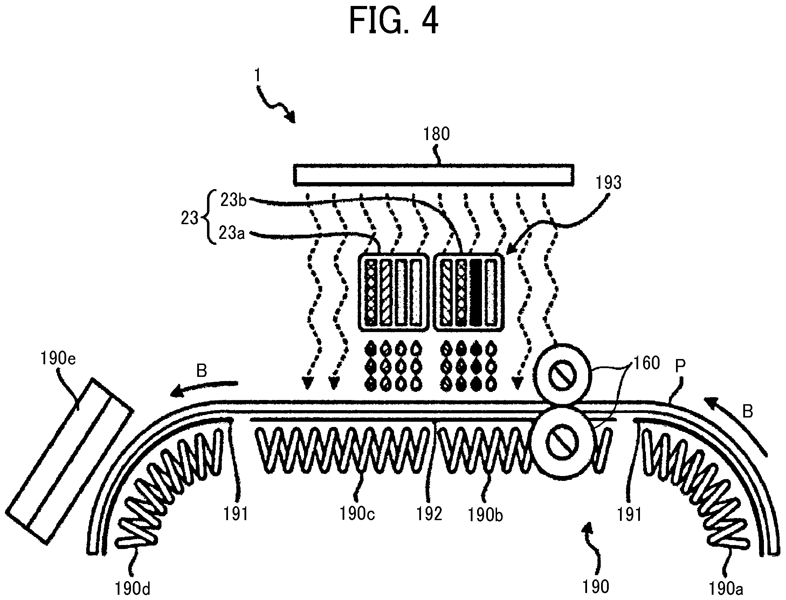

FIG. 4 is a diagram illustrating a configuration of the heater 190 of the liquid discharge apparatus 1 according to the present embodiment. In the example illustrated in FIG. 4, for the sake of simplicity, a part of the liquid discharge head 23 is omitted. As illustrated in FIG. 4, the heater 190 includes a preheater 190a, a print heater 190b, a print heater 190c, a post heater 190d, and a drying heater 190e. Each one of the heaters of the heater 190 is provided with a temperature sensor such as a thermistor used for temperature control.

The preheater 190a is a device that preheats a medium P to a temperature suitable for forming a liquid application surface (i.e., a surface to which liquid has been applied). For example, the preheater 190a may be a cord heater made of aluminum foil. The preheater 190a is attached to the back face of a conveyance guide plate 191. The preheater 190a heats the conveyance guide plate 191 to heat the medium P.

The print heater 190b and the print heater 190c are devices that keep the medium P warm when the liquid application surface is formed on the medium P. For example, the print heater 190b and the print heater 190c are cord heaters embedded in a platen 192 made of aluminum. The print heater 190b and the print heater 190c heat the platen 192 to heat the medium P.

The post heater 190d and the drying heater 190e are devices that heat the medium P on which the liquid application surface is formed to dry and fix the liquid such as ink on the medium P. For example, the post heater 190d may be a cord heater made of aluminum foil. The post heater 190d is attached to the back face of the conveyance guide plate 191. The post heater 190d heats the conveyance guide plate 191 to heat the medium P. For example, the drying heater 190e is an infrared (IR) heater. The drying heater 190 irradiates the liquid application surface of the medium P with IR radiation to dry the medium P. The drying heater 190e may be provided with a fan to send hot air to the liquid application surface of the medium P.

An operation of the liquid discharge apparatus 1 according to the present embodiment is described below.

The CPU 101 reads and analyzes print date in a reception buffer of the host I/F 109, performs desired image processing and sorting on the print data in the ASIC 105, and transfers the print date to the print controller 106.

The print controller 106 outputs the image data and the drive waveform to the head driver 140 at a predetermined timing. Specifically, the print controller 106 converts from digital to analog and amplifies pattern data of drive pulses to generate a drive waveform including one drive pulse or a plurality of drive pulses. The pattern data is stored in the ROM 102 and read by the CPU 101.

The image data for image output may be generated by storing font data in, for example, the ROM 102. The printer driver 170 of the host may develop the image data into bitmap data and transfer to the liquid discharge apparatus 1 to generate the image data.

The head driver 140 selectively applies the drive pulses forming the drive waveform given from the print controller 106 to the pressure generator of the liquid discharge head 23 based on the input image data to drive the liquid discharge head 23.

The heater 190 is turned on when the heater 190 wakes up from a sleep mode, and is controlled to a set temperature corresponding to the medium P or modes. When the heater 190 starts, the liquid discharge apparatus 1 is ready to form the liquid application surface, and starts an initial operation for forming the liquid application surface. The drying heater 190e is turned on when the formation of the liquid application surface starts.

The medium P is set on the side where the preheater 190a is disposed. The medium P is conveyed in the direction indicated by arrow B in FIG. 4 by the conveyance roller pair 160 to which a driving force is applied from the sub-scanning motor 150, and the liquid discharge head 23 discharges liquid onto the medium P to form the liquid application surface. The medium P may be, for example, a soft packaging medium, such as polyethylene terephthalate (PET), polyvinyl chloride (PVC), or oriented polypropylene (OPP), or a sheet medium besides the rolled sheet.

The medium P sent from the preheater 190a side is preheated to a temperature suitable for forming the liquid application surface by the preheater 190a. The preheated medium P is sent to an image forming section 193, in which the liquid discharge head 23 is disposed, by the conveyance roller pair 160.

In the image forming section 193, the liquid discharge head 23 discharges liquid such as ink onto the medium P while the print heater 190b and the print heater 190c keep the medium P warm to form the liquid application surface. Although the warmed air rises together with vapor, the fan 180 accelerates the convection of air so as to prevent the temperature from increasing excessively due to the accumulation of the warmed air in the upper portion of the liquid discharge apparatus 1.

The medium P is conveyed in the sub-scanning direction, and the carriage 15 moves in the direction (i.e., the main scanning direction) perpendicular to the movement direction of the medium P to form an image. When an image is formed, the number of times of movements (scans) of the carriage 15 can be changed according to the resolution of an image to be formed to form a high-resolution image. The medium P on which the liquid application surface has been formed in the image forming section 193 is further conveyed downstream.

The drying heater 190e is preheated so that the filament temperature thereof reaches a target temperature before the medium P on which the liquid application surface has been formed arrives. When the medium P on which the liquid application surface has been formed arrives, the drying heater 190e is turned on in synchronization with the timing of stopping the conveyance of the medium P in the sub-scanning direction. The timing of turning on the drying heater 190e can be changed according to the type of the medium P or modes.

The post heater 190d and the drying heater 190e that sends hot air dry and fix liquid such as ink (i.e., the liquid application surface) on the medium P. The medium P on which the liquid application surface has been dried and fixed is further conveyed downstream and wound in a roll shape.

The liquid discharge apparatus 1 according to the present embodiment is described below in detail.

In a typical DTF process, an adhesive powder is applied to the print side of a base material to which ink has been applied (i.e., the surface on which an image has been formed), and the base material is dried to manufacture a transfer base material. After that, the image on the transfer base material is thermally transferred to a recording medium.

However, when the adhesive powder is used according to a comparative example, the diameter of particles of components contained in the adhesive powder is about 200 to 300 µm, and the particles are not perfect spheres. Accordingly, a gap or uneven adhesion of the particles may be generated. In addition, since the adhesive powder reacts with moisture contained in the ink to adhere to the base material, the adhesive powder is less likely to adhere to a region of the base material where the adhesion amount of ink is small. The image in the portion where the adhesive powder does not adhere is not transferred. Accordingly, in the comparative example, spot color ink such as white ink, light ink, or clear ink is used at the region where the adhesion amount of ink is small to increase the adhesion amount of ink. In this case, color boundary bleeding or beading may occur, and image quality may be degraded.

By contrast, an embodiment of the present disclosure is as follows.

A liquid discharge apparatus according to the present embodiment includes a first discharge unit to discharge ink onto a base material, a second discharge unit to discharge a liquid binder for thermal transfer onto the base material on which the ink has been discharged, and a controller. The controller determines an ink usage per unit area based on image data and controls the second discharge unit so that a discharge amount of the binder per unit area when the determined ink usage is lower than a predetermined reference value is larger than a discharge amount of the binder per unit area when the determined ink usage is equal to or higher than the predetermined reference value.

In other words, a liquid discharge apparatus includes a first discharge unit to discharge ink onto a base material to form an image on the base material, a second discharge unit to discharge a liquid binder onto the base material onto which the ink has been discharged to form a binder on the base material, and circuitry. The circuitry causes the first discharge unit to discharge the ink onto a first region in the base material for a first amount per unit area based on an image data to form a first image on the base material, causes the first discharge unit to discharge the ink onto a second region in the base material for a second amount per unit area smaller than the first amount per unit area based on the image data to form a second image on the base material, causes the second discharge unit to discharge the liquid binder onto the first region for a third amount per unit area corresponding to the first amount per unit area of the ink, and causes the second discharge unit to discharge the liquid binder onto the second region for a fourth amount per unit area corresponding to the second amount per unit area of the ink. The fourth amount per unit aera is larger than the third amount per unit area.

The liquid binder may be referred to as, for example, a liquid glue. In the following description, the liquid binder may be referred to simply as a binder. Further, the phrase "the binder is discharged" means that the liquid binder is discharged.

The ink usage may be referred to as, for example, an ink adhesion amount or an adhesion amount of ink. The discharge amount of the binder may be referred to as, for example, an application amount of the binder or a binder application amount. In the following description, the ink usage per unit area may be referred to simply as the ink usage. The discharge amount of the binder per unit area may be referred to simply as the discharge amount of the binder.

The ink usage and the binder discharge amount will be described below in detail.

The controller 100 determines the ink usage per unit area based on the image data. The ink usage per unit area is the average or sum of the amount of ink used for pixels included in the unit area. The ink usage also indicates the amount of ink to be discharged into a region having the unit area.

The controller 100 adjusts the discharge amount of the binder based on the determined ink usage. When the determined ink usage is lower than a predetermined reference value in a region (e.g., a second amount per unit area of the ink in a second region), the controller 100 increases the discharge amount of the binder in the region (e.g., a fourth amount per unit area of the liquid binder). Specifically, for example, the controller 100 causes a second discharge unit to discharge the discharge amount of the binder per unit area larger than a predetermined reference value. The discharge amount of the binder also indicates the amount of binder to be discharged into a region having the unit area. When the determined ink usage is equal to or larger than the predetermined reference value in a region (e.g., a first amount per unit area of the ink in a first region, which is larger than the second amount per unit area of the ink), the controller 100 decreases the discharge amount of the binder in the region (e.g., a third amount per unit area of the liquid binder smaller than the fourth amount per unit area of the liquid binder). Specifically, for example, the controller 100 causes the second discharge unit to discharge the discharge amount of the binder per unit area smaller than the predetermined reference value.

One image is formed in multiple regions having the unit area. Accordingly, the controller 100 increases the discharge amount of the binder in a region where the ink usage is small and decreases the discharge amount of the binder in a region where the ink usage is large in one image.

According to the present embodiment, in the DTF printing, the liquid binder is discharged onto a base material. The liquid binder allows the amount of the spot color ink not to be increased in the region where the ink usage is small. As a result, the cost of the spot color ink can be reduced by the amount of the spot color ink to be increased. In addition, according to the present embodiment, since the liquid binder allows the amount of the spot color ink not to be excessively increased in the region where the ink usage is small, the color boundary bleeding or beading can be prevented. As a result, the image quality can be prevented from being degraded and can be increased.

When the film formed of ink or the binder is thin, the fastness such as washing fastness may deteriorate. Accordingly, in the present embodiment, the ink usage is determined, and the discharge amount of the binder is adjusted according to the determined ink usage. In the region where the ink usage is small, the discharge amount of the binder is increased to be larger than, for example, the predetermined reference value to obtain the sufficient fastness. In the region where the ink usage is large, the discharge amount of the binder is reduced to be less than, for example, the predetermined reference value to reduce the cost.

The predetermined reference value to be compared with the ink usage determined by the controller 100 is not limited to any particular value and can be appropriately selected. The predetermined reference value can be changed according to, for example, the type of ink, the type of the base material, or the type of the binder. The predetermined reference value for discharging the binder is not limited to any particular value and can be appropriately selected. The predetermined reference value can be changed according to, for example, the type of ink, the type of the base material, or the type of the binder.

When the liquid binder is used, the binder discharged from the liquid discharge head 23 is applied onto the base material to form a dot pattern formed of the liquid binder on the base material. The dot pattern is adjustable. The second discharge unit preferably discharges the binder onto the base material to form a regular dot pattern of the binder on the base material. The regular dot pattern of the binder, which is discharged by the second discharge unit and formed on the base material, allows the binder to be uniformly applied onto the base material, and thus the unevenness of the binder can be reduced. As a result, the image quality of an image formed on the base material can be prevented from being degraded and can be increased.

As described above, in the present embodiment, the ink usage is determined for each region (each region having the unit area), and the discharge amount of the binder is adjusted for each region. As a result, when the binder is discharged to form the regular dot pattern on the base material, a discharge pattern of the binder is regular, but the discharge amount of the binder is adjusted for each region in the discharge pattern.

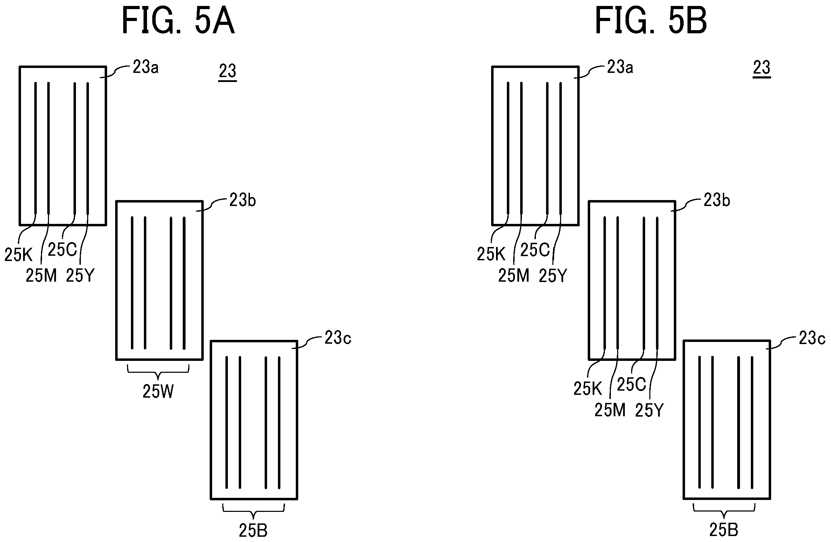

FIGS. 5A and 5B are schematic plan views of the liquid discharge head 23, illustrating the nozzle faces of the discharge units. FIGS. 5A and 5B illustrate two configuration examples. In the example illustrated in FIG. 5A, the discharge unit 23a includes nozzles 25K, 25M, 25C, and 25Y from which color inks are discharged. The discharge unit 23b includes nozzles 25W from which the white ink is discharged. The discharge unit 23c includes nozzles 25B from which the binder is discharged.

The liquid discharge apparatus 1 according to the present embodiment includes the first discharge unit that discharges ink onto the base material to form an image on the base material and the second discharge unit that discharges the liquid binder to form a layer of binder (or simply as a binder) on the base material. For example, the discharge unit 23a serves as the first discharge unit, and the discharge unit 23c serves as the second discharge unit. The discharge unit 23b may serve as, for example, a third discharge unit. However, such naming can be changed as appropriate.

In the example illustrated in FIG. 5A, the nozzles 25W form four nozzle rows, and the nozzles 25B form four nozzle rows, but the number of nozzle rows is not limited to four, and can be appropriately changed. The arrangement of the discharge units 23a, 23b, and 23c is not limited to the example illustrated in FIGS. 5A and 5B, and can be changed as appropriate.

The third discharge unit discharges white ink in the example described above, but the third discharge unit is not limited to this example, and may discharge, for example, light ink or clear ink. As described above, the white ink, the light ink, and the clear ink may be referred to as the spot color ink.

In the example illustrated in FIG. 5B, each of the discharge unit 23a and the discharge unit 23b includes nozzles 25K, 25M, 25C, and 25Y from which color inks are discharged. The discharge unit 23c includes nozzles 25B from which the binder is discharged. Such a configuration example is also included in the present embodiment.

The ink discharged by the first discharge unit is color ink containing a colorant. Examples of the color ink include black ink, magenta ink, cyan ink, and yellow ink. The present embodiment is not limited thereto, and the color ink may be one color ink. The colorant is not limited to any particular colorant, and a known colorant can be used.

The binder discharged by the second discharge unit may contain a colorant or may not contain a colorant. When the binder does not contain a colorant and is transparent, a desired image is easily obtained. When the binder contains a colorant, the color of the image to be obtained can be adjusted.

The binder used in the present embodiment is a binder for thermal transfer. The binder may be referred to as, for example, an adhesive liquid, an adhesive, an adhesive glue, or a binder liquid. As the binder used in embodiments of the present disclosure, a known binder used in the DTF printing can be used.

The base material in the present embodiment is a transfer base material. An image formed on the transfer base material is thermally transferable to a recording medium. As the base material, a known base material used in the DTF printing can be used. Examples of the base material include, but are not limited to, plastic films such as vinyl chloride resin films, PET films, polypropylene films, polyethylene films, and polycarbonate films.

The liquid discharge apparatus 1 discharges ink onto the base material and further discharges the binder onto the base material to form an image for transfer on the base material. The layer of the binder formed on the base material is brought into contact with a recording medium and thermally transferred to the recording medium. As a result, the image is formed on the recording medium.

As the recording medium, a cloth can be suitably used. Examples of the cloth include a fabric for a garment such as a T-shirt. The recording medium may be paper instead of a cloth.

As described above, the second discharge unit preferably discharges the binder onto the base material to form a regular dot pattern of the binder on the base material. The discharge pattern can be selected as appropriate. The second discharge unit preferably discharges the binder onto the base material to form a discharge pattern of the binder having a triangular, square, or hexagonal dot arrangement on the base material. In this case, the binder can be uniformly applied onto the base material, and the sufficient fastness can be obtained. In addition, the excessive binder usage can be prevented, and the binder usage can be reduced, which leads to the cost reduction.

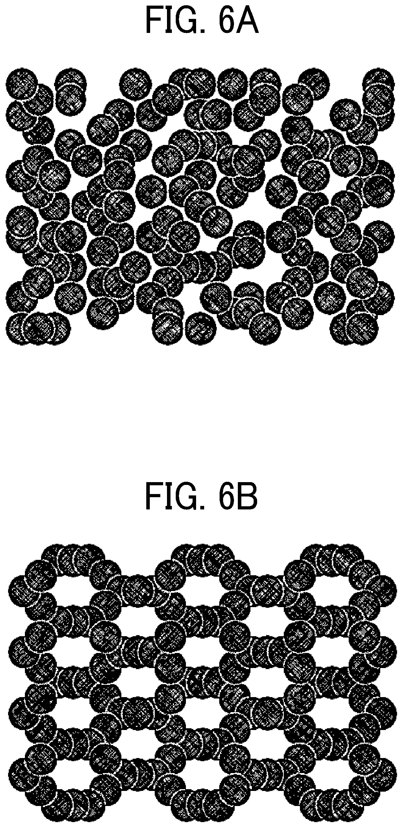

FIGS. 6A and 6B are diagrams each illustrating a discharge pattern of the binder. The discharge pattern of the binder may be referred to as, for example, the dot pattern. FIG. 6A illustrates a dot pattern of the binder having a random pattern according to a first example. FIG. 6B illustrates a dot pattern of the binder having a regular pattern according to a second example.

In the first example, the binder is unlikely to be uniformly applied. Accordingly, although acceptable fastness can be obtained, the strength of the image is uneven. In the second example, the binder is uniformly applied. Accordingly, the unevenness in the strength of the image can be prevented, and good fastness can be obtained.

In the second example, the binder is discharged onto the base material to form a hexagonal dot arrangement of the binder on the base material. Such a discharge pattern may be referred to as, for example, a dot pattern having a honeycomb structure. In the second example, the binder can be uniformly applied, and the unevenness of the binder can be reduced.

In the second embodiment, the pattern structure has high strength, and the sufficient fastness can be obtained. Thus, the image quality of the formed image can be prevented from being degraded. In addition, there is a region to which the binder is not discharged in the dot pattern having the honeycomb structure. Thus, the binder usage can be reduced, which leads to the cost reduction.

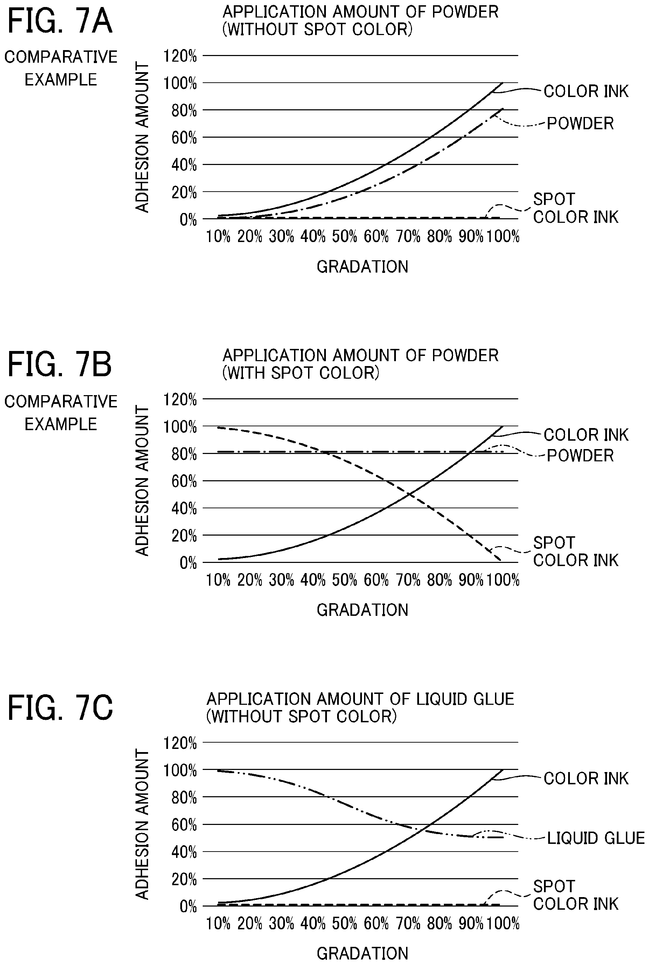

FIGS. 7A to 7C are graphs each illustrating an example of the relationship between an adhesion amount of color ink, an application amount of powder, an adhesion amount of spot color ink, and an application amount of liquid glue. The horizontal axis represents gradation (%), and the vertical axis represents adhesion amount (%).

The adhesion amount of color ink is the ink usage described above. The application amount of powder may be referred to as an application amount of adhesive powder, and indicates the application amount of the binder in a powder form. The adhesion amount of spot color ink is an index similar to the ink usage. The application amount of liquid glue is the discharge amount of the binder described above. These values are quantities per unit area.

FIG. 7A is a graph illustrating a comparative example when the spot color ink is not used. As the gradation increases, the color ink usage increases. Thus, the adhesion amount of color ink in the vertical axis increases with an increase in the gradation. In the comparative example, the usage of powder (adhesive powder) increases in accordance with the adhesion amount of color ink. Accordingly, as illustrated in FIG. 7A, the adhesion amount of color ink and the application amount of powder in the vertical axis increase in conjunction with each other as the gradation increases.

As described above, the powder adheres to, for example, moisture of the ink. Accordingly, in the comparative example illustrated in FIG. 7A, the powder does not adhere to a region where the adhesion amount of color ink is small, and an image in such a region may not be transferred. As a result, a transfer failure may occur, and an image formed on the recording medium may be significantly degraded.

FIG. 7B is a graph illustrating another comparative example when the spot color ink is used. As illustrated in FIG. 7B, the adhesion amount of spot color ink is large at a region where the adhesion amount of color ink is small.

Accordingly, in the region where the adhesion amount of color ink is small, the powder adheres to moisture of the spot color ink, and thus the transfer failure can be prevented. In the region where the adhesion amount of color ink is large, the adhesion amount of spot color ink is small because it is unnecessary to increase the spot color ink. The comparative example illustrated in FIG. 7B can prevent the transfer failure more reliably than the comparative example illustrated in FIG. 7A.

However, in the comparative example illustrated in FIG. 7B, the spot color ink is unnecessarily applied in order to adhere the powder to the base material. Accordingly, the color boundary bleeding or beading may occur, and thus the image quality may be degraded. In addition, the usage of the spot color ink increases, and thus the cost increases.

FIG. 7C is a graph illustrating a third example included in embodiments of the present disclosure, in which the liquid binder (liquid glue) is used. As illustrated in FIG. 7C, in the present embodiment, the application amount of liquid glue (i.e., the discharge amount of the binder) is adjusted to be large in the region where the adhesion amount of color ink is small. The fastness such as washing fastness can be sufficient by such an adjustment. On the other hand, the application amount of liquid glue is reduced at the region where the adhesion amount of color ink is large. Such an adjustment can reduce the usage of the binder. In the present embodiment, the spot color ink is not unnecessarily used. Accordingly, the color boundary bleeding and beading can be prevented, and the cost can be reduced.

Aspects of the present disclosure are, for example, as follows.

### Aspect 1

A liquid discharge apparatus includes a first discharge unit, a second discharge unit, and a controller. The first discharge unit discharges ink onto a base material. The second discharge unit discharges a liquid binder for thermal transfer onto the base material onto which the ink has been discharged. The controller determines an ink usage per unit area based on image data and controls the second discharge unit so that a discharge amount of the binder per unit area when the determined ink usage is lower than a predetermined reference value is larger than a discharge amount of the binder per unit area when the determined ink usage is equal to or higher than the predetermined reference value.

In other words, a liquid discharge apparatus includes a first discharge unit to discharge ink onto a base material to form an image on the base material, a second discharge unit to discharge a liquid binder onto the base material onto which the ink has been discharged to form a binder on the base material, and circuitry. The circuitry causes the first discharge unit to discharge the ink onto a first region in the base material for a first amount per unit area based on an image data to form a first image on the base material, causes the first discharge unit to discharge the ink onto a second region in the base material for a second amount per unit area smaller than the first amount per unit area based on the image data to form a second image on the base material, causes the second discharge unit to discharge the liquid binder onto the first region for a third amount per unit area corresponding to the first amount per unit area of the ink, and causes the second discharge unit to discharge the liquid binder onto the second region for a fourth amount per unit area corresponding to the second amount per unit area of the ink. The fourth amount per unit aera is larger than the third amount per unit area.

### Aspect 2

In the liquid discharge apparatus according to Aspect 1, the second discharge unit discharges the binder in a regular pattern.

In other words, the circuity causes the second discharge unit to discharge the liquid binder to form a regular pattern of the liquid binder on the base material.

### Aspect 3

In the liquid discharge apparatus according to Aspect 2, the second discharge unit discharges the binder in a dot arrangement formed of a triangle, a square, or a hexagon as the pattern.

In other words, the circuity causes the second discharge unit to discharge the liquid binder to form the regular pattern having a triangular, square, or hexagonal dot arrangement.

### Aspect 4

In the liquid discharge apparatus according to any one of Aspects 1 to 3, the base material is a transfer base material for thermally transferring an image onto a recording medium.

In other words, the base material is a transfer base material, and the circuitry causes the first discharge unit and the second discharge unit to form the image thermally transferable from the transfer base material to a recording medium.

Any one of the above-described operations may be performed in various other ways, for example, in an order different from the one described above.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. A liquid discharge apparatus (1) comprising:
a first discharge unit (23a) to discharge ink onto a base material to form an image on the base material;
a second discharge unit (23c) to discharge a liquid binder onto the base material onto which the ink has been discharged to form a binder on the base material; and
circuitry (100) configured to:
cause the first discharge unit (23a) to discharge the ink onto a first region in the base material for a first amount per unit area based on an image data to form a first image on the base material;
cause the first discharge unit (23a) to discharge the ink onto a second region in the base material for a second amount per unit area smaller than the first amount per unit area based on the image data to form a second image on the base material;
cause the second discharge unit (23c) to discharge the liquid binder onto the first region for a third amount per unit area corresponding to the first amount per unit area of the ink; and
cause the second discharge unit (23c) to discharge the liquid binder onto the second region for a fourth amount per unit area corresponding to the second amount per unit area of the ink, the fourth amount per unit aera being larger than the third amount per unit area.

2. The liquid discharge apparatus (1) according to claim 1,
wherein the circuity causes the second discharge unit (23c) to discharge the liquid binder to form a regular pattern of the liquid binder on the base material.

3. The liquid discharge apparatus (1) according to claim 2,
wherein the circuity causes the second discharge unit (23c) to discharge the liquid binder to form the regular pattern having a triangular, square, or hexagonal dot arrangement.

4. The liquid discharge apparatus (1) according to any one of claims 1 to 3,
wherein the base material is a transfer base material, and
the circuitry (100) causes the first discharge unit (23a) and the second discharge unit (23c) form the image thermally transferable from the transfer base material to a recording medium.
